# EUROPÄISCHE PATENTANMELDUNG

(11) **EP 3 118 650 A1**
(43) Veröffentlichungstag der Anmeldung: **18.01.2017**
(21) Anmeldenummer: 15002134.3
(22) Anmeldetag: 17.07.2015
(51) Int. Cl.: G01S 7/527, B65H 7/12, G01N 29/11, G01N 29/36, G01S 15/04

(54) **ULTRASCHALL-MESSVORRICHTUNG UND VERFAHREN ZUR ERMITTLUNG DER ÄNDERUNG DER AMPLITUDE EINES ULTRASCHALLSIGNALS**

(71) Anmelder: Pepperl + Fuchs GmbH, 68307 Mannheim (DE)
(72) Erfinder: DÖRR, Klaus, 68229 Mannheim (DE)
(74) Vertreter: Koch Müller Patentanwaltsgesellschaft mbH

(57) **Zusammenfassung**

Ultraschall-Messvorrichtung aufweisend, einen ersten Ultraschallwandler und einen zweiten Ultraschallwandler, wobei die beiden Ultraschallwandler entlang einer Verbindungsgeraden angeordnet sind, und eine Steuereinheit, wobei die Steuereinheit mit den beiden Ultraschallwandlern in einer Wirkverbindung steht, und der erste Ultraschallwandler ein Ultraschallsignal mit einer Sendefrequenz aussendet und der zweite Ultraschallwandler das ausgesendete Ultraschallsignal empfängt, und einer Recheneinheit, wobei die Recheneinheit eingerichtet ist, eine Veränderung in der Höhe der Amplitude zu ermitteln, und wobei von der Recheneinheit nur eine Veränderung in der Höhe der Amplitude zu ermitteln ist, wenn die Frequenz des empfangenen Ultraschallsignals mit der Sendefrequenz übereinstimmt und das empfangene Ultraschallsignal eine Mindestamplitude aufweist.

## Beschreibung

Die Erfindung betrifft eine Ultraschall-Messvorrichtung und ein Ultraschall-Messvorrichtung und Verfahren zur Ermittlung der Änderung der Amplitude eines Ultraschallsignals.

Aus der JP 10-253757 ist eine Ultraschall-Abstandsmessvorrichtung bekannt. Der Abstand eines echogebenden Gegenstandes wird nur ausgewertet, wenn eine Dummy Signal innerhalb eines bestimmten Zeitintervalls mitempfangen wird.

Vor diesem Hintergrund besteht die Aufgabe der Erfindung darin, eine Vorrichtung und ein Verfahren anzugeben, die jeweils den Stand der Technik weiterbilden.

Die Aufgabe wird durch eine Ultraschall-Abstandsmessvorrichtung mit den Merkmalen des Patentanspruchs 1 und durch ein Verfahren zur Ermittlung der Änderung der Amplitude eines Ultraschallsignals mit den Merkmalen des Patentanspruchs 7 gelöst. Vorteilhafte Ausgestaltungen der Erfindung sind Gegenstand von Unteransprüchen.

Gemäß dem ersten Gegenstand der Erfindung wird eine Ultraschall-Messvorrichtung bereitgestellt, aufweisend einen ersten Ultraschallwandler und einen zweiten Ultraschallwandler, wobei die beiden Ultraschallwandler entlang einer Verbindungsgeraden angeordnet sind, und die Ultraschall-Messvorrichtung eine Steuereinheit aufweist, wobei die Steuereinheit mit den beiden Ultraschallwandlern in einer Wirkverbindung steht, und der erste Ultraschallwandler ein Ultraschallsignal mit einer Sendefrequenz aussendet und der zweite Ultraschallwandler das ausgesendete Ultraschallsignal empfängt, und einer Recheneinheit, wobei die Recheneinheit eingerichtet ist, eine Veränderung in der Höhe der Amplitude zu ermitteln, und wobei von der Recheneinheit nur eine Veränderung in der Höhe der Amplitude zu ermitteln ist, wenn die Frequenz des empfangenen Ultraschallsignals mit der Sendefrequenz übereinstimmt und das empfangene Ultraschallsignal eine Mindestamplitude aufweist

Gemäß dem zweiten Gegenstand wird ein Verfahren zur Ermittlung der Änderung der Amplitude eines Ultraschallsignals bereitgestellt, wobei das Verfahren mittels einer Ultraschall-Messvorrichtung durchgeführt wird und wobei die Ultraschall-Messvorrichtung einen ersten Ultraschallwandler und einen zweiten Ultraschallwandler und eine Steuereinheit und eine Recheneinheit umfasst, und die beiden Ultraschallwandler entlang einer Verbindungsgeraden angeordnet sind, und die Steuereinheit mit beiden Ultraschallwandler in einer Wirkverbindung steht, und mittels des ersten Ultraschallwandlers ein Ultraschallsignal mit einer Sendefrequenz ausgesendet wird, und mittels des zweiten Ultraschallwandler das ausgesendete Ultraschallsignal empfangen wird und bei dem empfangenen Ultraschallsignal mittels der Recheneinheit eine Veränderung in der Höhe der Amplitude im Vergleich zu einer vorgegebenen Amplitude ermittelt wird, und wobei eine Prüfung, ob eine Veränderung in der Amplitude vorliegt, durchgeführt wird, indem in einem ersten Verfahrensschritt die Übereinstimmung der Frequenz des empfangenen Signals mit der ersten Sendefrequenz geprüft wird und in einem zweiten Verfahrensschritt geprüft wird, ob das empfangene Signal eine Mindestamplitude aufweist und falls die Frequenz des empfangenen Ultraschallsignals mit der Sendefrequenz übereinstimmt und das empfangene Ultraschallsignal eine Mindestamplitude aufweist ein dritter Verfahrensschritt zur Ermittlung der Veränderung der Amplitude des empfangenen Ultraschallsignals durchgeführt wird.

Es sei angemerkt, dass es vorteilhaft nicht nur die Veränderung der Amplitude an sich, sondern auch die Größe der Veränderung der Amplitude aufgrund von Veränderung der Größe der Absorption des Ultraschallmediums zu ermitteln. Es versteht sich, dass die Absorption des durchzuschallenden Mediums nur so hoch sein darf, dass auch nach dem Durchdringen des Mediums im Regelfall eine ausreichende Restamplitude vorhanden ist. Unter dem Begriff Regelfall wird vorliegend der normale Regelbetrieb der Ultraschallmessvorrichtung verstanden.

Des Weiteren sei angemerkt, dass beide Ultraschallwandler vorzugsweise als ein piezokeramisches Elemente ausgebildet sind. Der erste Ultraschallwandler wird mit einer HF Spannung im Bereich zwischen 40 kHz und 800 kHz angesteuert und sendet Ultraschallwellen auf der Ansteuerfrequenz aus. Mit dem zweiten Ultraschallwandler werden eintreffende Ultraschallwellen empfangen und eine HF-Spannung mit der Frequenz der eintreffenden Ultraschallwellen erzeugt.

In einer Weiterbildung ist die Steuereinheit eingerichtet, in dem Sendemodus ein Paket von mehreren aufeinanderfolgenden Ultraschallsignalen auszusenden. Ein Vorteil ist, dass bei dem Empfang von mehreren in kurzer Folge eintreffenden Ultraschallsignalen sich eine Änderung der Amplitude besonders zeitnah detektieren lässt.

In einer Ausführungsform ist ein Bandpass Frequenzfilter vorgesehen, um nur Ultraschallsignale auf der Sendefrequenz durchzulassen und auszuwerten. Ein Vorteil ist, dass die Störfestigkeit erhöht wird, indem nur die auf der Sendefrequenz liegenden Echosignale ausgewertet werden. Es versteht sich, dass in einer Weiterbildung auch eine digitale Bandpassfilterung vorgesehen ist.

In einer anderen Weiterbildung findet die Prüfung auf Übereinstimmung mit der Sendefrequenz des empfangenen Ultraschallsignals und die Prüfung der Mindestamplitude an dem empfangenen undemodulierten Ultraschallsignal statt. Ein Vorteil ist, dass eine aufwändige Auswertung d.h. Bestimmung der Änderung der Amplitude nur dann erfolgt, wenn die empfangenen Ultraschallsignale nach der Prüfung als gültige Empfangssignale eingestuft werden. Hierdurch erhöht sich die Störsicherheit und Zuverlässigkeit der Bestimmung der Änderung. Ferner lassen sich die Prüfungen wesentlich schneller an einem undemodulierten als an einem demodulierten Signal durchführen.

In einer anderen Ausführungsform ist vorgesehen, ein Paket mit mehreren Ultraschallimpulsen zu empfangen, wobei eine Mindestzahl von Ultraschallimpulsen vorliegen muss, um die Änderung der Amplitudenhöhe zu ermitteln. Vorzugsweise ist vorgesehen, mehrere Ultraschallimpulse mit einem vorgegeben zeitlichen Abstand zu empfangen. Hierzu wird insbesondere ein Paket aufweisend eine erste Anzahl N1 von aufeinanderfolgenden Ultraschallimpulsen gesendet, wobei für die erste Anzahl gilt 1 < N1 < 20.

Ferner ist vorgesehen, dass zwei unmittelbar aufeinanderfolgenden Ultraschallimpulsen mit einem ersten zeitlichen Abstand ausgesendet werden und in einem vierten Verfahrensschritt der zeitliche Abstand zwischen zwei empfangenen unmittelbar aufeinanderfolgenden Ultraschallimpulsen ermittelt wird und der dritte Verfahrensschritt nur durchführt wird, wenn der ermittelt zeitliche Abstand mit dem ersten zeitlichen Abstand übereinstimmt.

In einer anderen Weiterbildung wird in einem fünften Verfahrensschritt die Signalform eines empfangenen Ultraschallimpuls mit der Signalform des gesendeten Ultraschallimpuls auf Übereinstimmung geprüft, wobei der fünfte Verfahrensschritt vor dem dritten Verfahrensschritt durchgeführt wird und der dritte Verfahrensschritt nur ausgeführt wird, wenn ein vorgegebenes Maß an Übereinstimmung zwischen den empfangenen Ultraschallimpuls und dem gesendeten Ultraschallimpuls gegeben ist.

Ferner ist es vorteilhaft, wenn der dritte Verfahrensschritt nur durchgeführt wird, wenn die Anzahl der aufeinanderfolgenden empfangenen Ultraschallimpulse größer als 1 ist oder in einer alternativen Ausbildung die Anzahl der empfangenen Ultraschallimpulse genau der ausgesendeten Anzahl der Ultraschallimpulse entspricht. Untersuchungen haben gezeigt, dass es auch vorteilhaft ist an der Stelle der ersten Frequenz das Ultraschallsignal solange aufintegrieren, bis die Höhe der Mindestamplitude des Ultraschallsignals erreicht wird oder eine maximal vorgegebene Integrationszeit überschritten wird.

In einer Weiterbildung werden der erste Verfahrensschritt und der zweite Verfahrensschritt nahezu gleichzeitig oder genau gleichzeitig durchgeführt werden.

In einer Ausführungsform wird zur Bestimmung der Veränderung der Amplitude des empfangenen Ultraschallsignals die Höhe der Amplitude im Vergleich zu einer Referenzamplitudenhöhe verglichen. Hierdurch lässt sich eine Abweichung bereits nach einem einzigen empfangenen Ultraschallimpuls detektieren.

In einer Weiterbildung wird der erste Ultraschallwandler in einem Dauersendemodus oder einem gepulsten Sendemodus betrieben. Untersuchungen haben gezeigt, dass eine Verwendung des Verfahrens oder der Vorrichtung besonders zur Doppelbogenkontrolle geeignet ist. Hierbei wird als Referenzamplitude die Absorption einer Lage eines Druckmediums berücksichtigt, indem die Höhe der empfangenen Amplitude als Referenzamplitude hinterlegt wird. Tritt eine Abweichung auf, indem sich die empfangene Amplitude gegenüber der Referenzamplitude reduziert, lässt sich auf eine zu große Dicke des Druckmediums oder auf eine zu großen Anzahl von Lagen des Druckmediums schließen. Weicht die Amplitude gegenüber der Referenzamplitude zu größeren Werten ab, lässt sich auf ein Fehlen des Druckmediums schließen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf. Darin zeigt:
- Figur 1: eine Ansicht auf eine erfindungsgemäße Ausführungsform,
- Figur 2a: eine zeitliche Abfolge zwischen einem gesendeten Ultraschallimpuls und einem Echoimpuls, dargestellt in einem Amplituden über der Zeit Diagramm,
- Figur 2b: Ansicht auf eine Bandpassfilterung in einem Intensität über der Frequenz Diagramm.

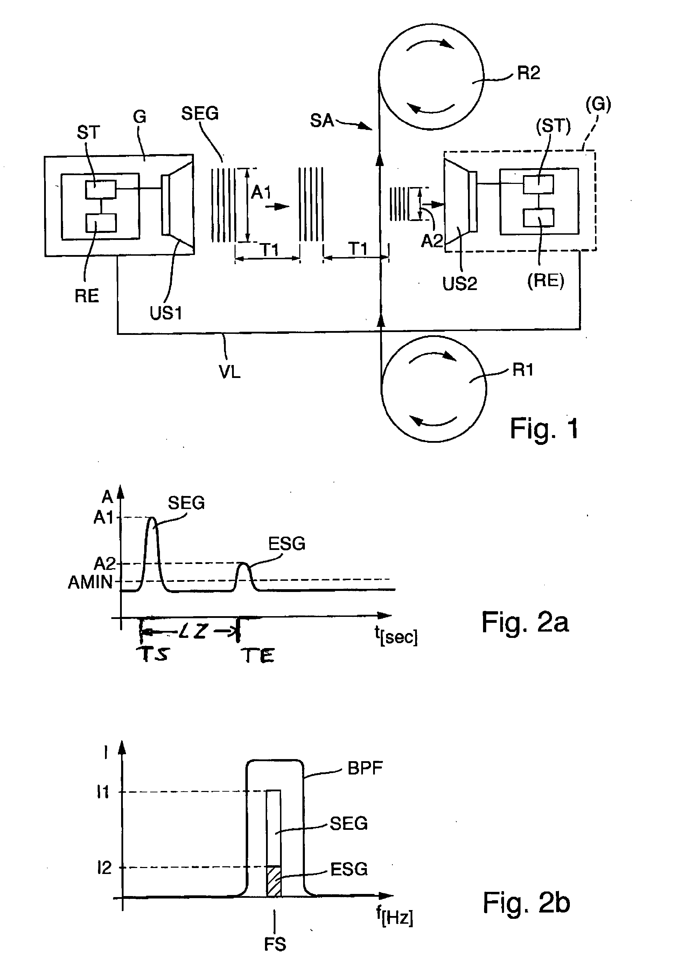

Die Abbildung der Figur 1 zeigt eine Ansicht einer ersten Ausführungsform, aufweisend eine Ultraschall-Messvorrichtung G. Die Ultraschall-Messvorrichtung G weist einen ersten Ultraschallwandler US1 einen zweiten Ultraschallwandler US2 auf. Die beiden Ultraschallwandler US1 und US2 sind räumlich voneinander auf einer geraden Linie beabstandet. Ferner weist die Ultraschall-Messvorrichtung G eine Steuereinheit ST und eine Recheneinheit RE auf, wobei die Steuereinheit ST und die Recheneinheit RE vorzugsweise in Zusammenhang mit dem ersten Ultraschallwandler in einem gemeinsamen Gehäuse angeordnet sind. In einer alternativen Ausführungsform sind die Steuereinheit ST und die Recheneinheit RE mit dem zweiten Ultraschallwandler US2 in einem Gehäuse angeordnet. In einer weiteren Alternative sind beide Ultraschallwandler identisch ausgeführt, d. h. weisen jeweils eine eigene Steuereinheit ST und eine eigene Recheneinheit RE auf. Es ist bevorzugt, die beiden Ultraschallwandler US1 und US2 mittels einer Verbindungsleitung VL oder einer drahtlosen Wirkverbindung zu verschalten.

Die Steuereinheit ST steht mit den beiden Ultraschallwandler US1 und US2 mittels einer elektrischen Verbindung in einer Wirkverbindung. Der erste Ultraschallwandler US1 sendet mehrere aufeinanderfolgende Ultraschallsignale SEG mit einer vorgegebenen Sendefrequenz FS als eine Pulsfolge aus. Zwischen den ausgesendeten unmittelbar aufeinanderfolgenden Ultraschallsignalen ist ein zeitlicher Abstand T1 ausgebildet. Die ausgesendeten Ultraschallsignale SEG dringen durch ein absorbierendes Medium SA unter Beibehaltung des zwischen zwei Pulsen vorgegebenen zeitlichen Abstands T1. Hierbei schwächt sich die Amplitude von einem ersten hohen Wert A1 auf einen zweiten niedrigen Wert A2 ab. Anschließend werden die Ultraschallsignale ESG von dem zweiten Ultraschallwandler US2 empfangen. Vorliegend ist das absorbierendes Medium SA als Druckmedium ausgebildet. Das Druckmedium wird von einer ersten Rolle R1 auf eine zweite Rolle R2 aufgewickelt.

Nach dem Empfang wird von der Steuereinheit ST an den undemodulierten empfangenen Ultraschallsignalen ESG die Frequenz auf Übereinstimmung mit der Frequenz FS der gesendeten Ultraschallsignale SEG geprüft. Bei einer Übereinstimmung der Frequenzen wird geprüft, inwieweit die empfangenen Ultraschallsignale ESG eine Mindestamplitude AMIN aufweisen. Sofern auch die Mindestamplitude gegeben ist, wird von der Recheneinheit RE vorzugsweise aus dem Vergleich mit einer vorgegebenen Amplitude ermittelt, und bei einer Abweichung die empfangenen Ultraschallsignale ESG als ungültig zu klassifizieren.

In der Abbildung der Figur 2a eine zeitliche Abfolge in einem Diagramm Amplitude A über der Zeit t zwischen einem einzigen gesendeten Ultraschallimpuls und einem einzigen Echoimpuls für die Anordnung der Figur 1 dargestellt. Im Folgenden werden nur die Unterschiede zu der Abbildung der Figur 1 erläutert. Der Ultraschallwandler US1 sendet die Ultraschallsignale SEG zu einem ersten Zeitpunkt TS mit der Amplitude A1 aus und empfängt zu einem zweiten Zeitpunkt TE das Ultraschallsignal ESG mit der Amplitudenwert A2, wobei der Wert A2 der empfangenen Amplitude oberhalb einer Mindestamplitude AMIN liegt. Aus der Differenz der beiden Zeitpunkten TS und TE wird eine Laufzeit LZ berechnet. Die Laufzeit LZ lässt sich auf Übereinstimmung mit einer Referenzzeit vergleichen und

In der Figur 2b ist in einem Diagramm die Intensität I über der Frequenz f ein Bandpassfilter BPF dargestellt. Die Filterung mittels des Bandpassfilters BPF ist der Ermittlung der Änderung der Amplitude vorgeschaltet, um Störsignale zu unterdrücken. Es zeigt sich, dass das Bandpassfilter BPF genau mit einer angemessenen Halbwertbreite von wenigen 100 Hz um die Mitte der Frequenz FS der gesendeten Ultraschallsignale SEG gelegt ist und dass das ausgesendete Ultraschallsignal SEG eine erste Intensität I1 und das empfangene Ultraschallsignal ESG eine zweite wesentliche kleinere Intensität I2 aufweist, wobei die Intensität grundsätzlich proportional zu dem Quadrat der Amplitude ist.

Als Alternative lässt sich anstelle des Bandpasses auch eine digitale Filterung vornehmen. Ein Vorteil ist, dass die hohen Anforderungen an eine geringe Halbwertsbreite des Bandpassfilters entfallen.

## Patentansprüche

1. Ultraschall-Messvorrichtung (G) aufweisend,
einen ersten Ultraschallwandler (US1) und einem zweiten Ultraschallwandler (US2), wobei die beiden Ultraschallwandler (US1, US2) entlang einer Verbindungsgeraden angeordnet sind,
eine Steuereinheit (ST), wobei die Steuereinheit (ST) mit beiden Ultraschallwandlern (US1, US2) in einer Wirkverbindung steht, und der erste Ultraschallwandler (US1) ein Ultraschallsignal (SEG) mit einer Sendefrequenz (FS) aussendet und der zweite Ultraschallwandler (US2) das ausgesendete Ultraschallsignal (ESG) empfängt,
einer Recheneinheit (ST), wobei die Recheneinheit (RE) eingerichtet ist, eine Veränderung in der Höhe der Amplitude zu ermitteln, **dadurch gekennzeichnet, dass**
von der Recheneinheit (RE) nur eine Veränderung in der Höhe der Amplitude zu ermitteln ist, wenn die Frequenz des empfangenen Ultraschallsignals (ESG) mit der Sendefrequenz (FS) übereinstimmt und das empfangene Ultraschallsignal (ESG) eine Mindestamplitude (AMIN) aufweist.

2. Ultraschall-Messvorrichtung (G) nach Anspruch 1, **dadurch gekennzeichnet, dass** die Steuereinheit (ST) eingerichtet ist, mittels des erstes Ultraschallwandlers (US1) ein Paket von mehreren aufeinanderfolgenden Ultraschallsignalen auszusenden.

3. Ultraschall-Messvorrichtung (G) nach Anspruch 1 oder Anspruch 2, **dadurch gekennzeichnet, dass** ein Bandpass Frequenzfilter (BPF) vorgesehen ist, um bei den empfangenen Ultraschallsignalen (ESG) nur Ultraschallsignale auf der Sendefrequenz (FS) durchzulassen und auszuwerten.

4. Ultraschall-Messvorrichtung (G) nach einem oder mehreren der vorangegangenen Ansprüche, **dadurch gekennzeichnet, dass** die Prüfung der Übereinstimmung mit der Sendefrequenz (FS) des empfangenen Ultraschallsignal (ESG) und die Prüfung der Mindestamplitude (AMIN) an dem empfangenen undemodulierten Ultraschallsignal (ESG) stattfindet.

5. Ultraschall-Messvorrichtung (G) nach einem oder mehreren der vorangegangenen Ansprüche, **dadurch gekennzeichnet, dass** vorgesehen ist, ein Paket mit mehreren Ultraschallimpulsen zu empfangen und dass eine Mindestzahl von Ultraschallimpulsen vorliegen muss, um die Änderung in der Amplitudenhöhe zu ermitteln.

6. Ultraschall-Messvorrichtung nach einem der vorstehenden Ansprüche, **dadurch gekennzeichnet, dass** vorgesehen ist, auf der Sendefrequenz (FS) mehrere Ultraschallimpulse mit jeweils einem vorgegeben zeitlichen Abstand (T1) zu empfangen, um die Änderung in der Amplitudenhöhe zu ermitteln.

7. Verfahren zur Ermittlung der Änderung der Amplitude eines Ultraschallsignals, mittels einer Ultraschall-Messvorrichtung (G), wobei die Ultraschall-Messvorrichtung (G) einen ersten Ultraschallwandler (US1) und einen zweiten Ultraschallwandler (US2) und eine Steuereinheit (ST) und eine Recheneinheit (RE) umfasst, und
die beiden Ultraschallwandler (US1, US2) entlang einer Verbindungsgeraden angeordnet sind, und die Steuereinheit (ST) mit beiden Ultraschallwandlern (US1, US2) in einer Wirkverbindung steht, und
mittels des ersten Ultraschallwandlers (US1) ein Ultraschallsignal mit einer Sendefrequenz (FS) ausgesendet wird, und
mittels des zweiten Ultraschallwandlers (US2) das ausgesendete Ultraschallsignal empfangen wird, und
bei dem empfangenen Ultraschallsignal mittels der Recheneinheit (RE) eine Veränderung in der Höhe der Amplitude im Vergleich zu einer vorgegebenen Amplitude ermittelt wird,
**dadurch gekennzeichnet, dass**
eine Prüfung, ob eine Veränderung in der Amplitude vorliegt, durchgeführt wird, indem in einem ersten Verfahrensschritt die Übereinstimmung der Frequenz des empfangenen Signals mit der ersten Sendefrequenz geprüft wird und in einem zweiten Verfahrensschritt das empfangene Signal auf eine Mindestamplitude geprüft wird und wenn die Frequenz des empfangenen Ultraschallsignals mit der Sendefrequenz übereinstimmt und das empfangene Ultraschallsignal eine Mindestamplitude aufweist ein dritter Verfahrensschritt zur Ermittlung der Veränderung der Amplitude des empfangenen Ultraschallsignals durchgeführt wird.

8. Verfahren zur Ermittlung der Änderung der Amplitude eines Ultraschallsignals nach Anspruch 7, **dadurch gekennzeichnet, dass** ein Paket aufweisend eine erste Anzahl N1 von aufeinanderfolgenden Ultraschallimpulsen gesendet wird, wobei für die erste Anzahl gilt 1 < N1 < 20.

9. Verfahren zur Ermittlung der Änderung der Amplitude eines Ultraschallsignals nach Anspruch 7 oder Anspruch 8, **dadurch gekennzeichnet, dass** zwei unmittelbar aufeinanderfolgenden Ultraschallimpulsen einen ersten zeitlichen Abstand (T1) ausgesendet werden und In einem vierten Verfahrensschritt der zeitliche Abstand (T1) zwischen zwei empfangenen unmittelbar aufeinanderfolgenden Ultraschallimpulsen ermittelt wird und der dritte Verfahrensschritt nur durchführt wird, wenn der ermittelte zeitliche Abstand mit dem ersten zeitlichen Abstand (T1) übereinstimmt.

10. Verfahren zur Ermittlung der Änderung der Amplitude eines Ultraschallsignals nach einem oder mehreren der Ansprüche 7 bis 9, **dadurch gekennzeichnet, dass** in einem fünften Verfahrensschritt die Signalform eines empfangenen Ultraschallimpuls mit der Signalform des gesendeten Ultraschallimpuls auf Übereinstimmung geprüft wird und der fünfte Verfahrensschritt vor dem dritten Verfahrensschritt durchgeführt wird und der dritte Verfahrensschritt nur ausgeführt wird, wenn ein vorgegebenes Maß an Übereinstimmung gegeben ist.

11. Verfahren zur Ermittlung der Änderung der Amplitude eines Ultraschallsignals nach einem oder mehreren der Ansprüche 7 bis 10, **dadurch gekennzeichnet, dass** der dritte Verfahrensschritt nur durchgeführt wird, wenn die Anzahl der aufeinanderfolgenden empfangenen Ultraschallimpulse größer als 1 ist oder die Anzahl der empfangenen Ultraschallimpulse genau der ausgesendeten Anzahl der Ultraschallimpulse entspricht.

12. Verfahren zur Ermittlung der Änderung der Amplitude eines Ultraschallsignals nach einem oder mehreren der Ansprüche 7 bis 11, dadurch gekenntzeichnet, dass an der Stelle der ersten Frequenz das Ultraschallsignal solange aufintegriert wird, bis die Höhe der Mindestamplitude (AMIN) des Ultraschallsignals erreicht wird oder eine maximal vorgegebene Integrationszeit überschritten wird.

13. Verfahren zur Ermittlung der Änderung der Amplitude eines Ultraschallsignals nach einem oder mehreren der Ansprüche 7 bis 12, **dadurch gekennzeichnet, dass** der erste Verfahrensschritt und der zweite Verfahrensschritt nahezu oder genau gleichzeitig durchgeführt werden.

14. Verfahren zur Ermittlung der Änderung der Amplitude eines Ultraschallsignals nach einem oder mehreren der Ansprüche 7 bis 13, **dadurch gekennzeichnet, dass** zur Bestimmung der Veränderung der Amplitude des empfangenen Ultraschallsignals die Höhe der Amplitude im Vergleich zu einer Referenzamplitudenhöhe verglichen wird.

15. Verfahren zur Ermittlung der Änderung der Amplitude eines Ultraschallsignals nach einem oder mehreren der Ansprüche 7 bis 14, **dadurch gekennzeichnet, dass** der erste Ultraschallwandler (US1) in einem Dauersendemodus oder einem gepulsten Sendemodus betrieben wird.

16. Verwendung des Verfahrens oder der Vorrichtung nach einem oder mehreren der vorangegangenen Ansprüche zur Doppelbogenkontrolle.
